# DEMANDE DE BREVET EUROPEEN

(11) **EP 3 614 094 A1**
(43) Date de publication de la demande: **26.02.2020**
(21) Numéro de dépôt: 19168599.9
(22) Date de dépôt: 11.04.2019
(51) Int. Cl.: F28F 9/02, F28F 9/26, F28F 9/06, F28F 9/14, F16L 27/02, F16L 47/06, F28D 1/053, H01M 10/625, B60K 1/00

(54) **RAMPE DISTRIBUTRICE-COLLECTRICE DE FLUIDE**

(30) Priorité: 02.05.2018 FR 1870495; 13.09.2018 FR 1871035
(71) Demandeur: AKWEL, 01410 Champfromier (FR)
(72) Inventeur: FERNANDES, Joaquim, 84380 MAZAN (FR); DREUX, Jérémy, 95630 MERIEL (FR); SANDA, Stéphane, 84570 MALEMORT DU COMTAT (FR)

(57) **Abrégé**

La rampe (10) comprend une colonne (12) pourvue selon un axe longitudinal d'une pluralité d'orifices (20) de distribution du fluide espacés les uns des autres. La colonne (12) est montée de façon amovible à partir d'une pluralité de tronçons modulaires (14A, 14B, 14C), chaque tronçon de colonne (14A, 14B, 14C) étant pourvu d'au moins un embout axial tubulaire femelle et/ou d'au moins un embout axial tubulaire mâle et muni d'une ouverture radiale délimitant l'orifice de distribution (20). En outre, un embout tubulaire mâle est apte à s'emboîter et à coulisser de façon étanche à l'intérieur d'un embout tubulaire femelle pour permettre un déplacement en translation des tronçons (14A, 14B, 14C) entre eux dans des directions d'allongement et de raccourcissement de la colonne (12) afin de faire varier l'écartement entre deux orifices de distribution (20).

## Description

### Domaine technique

La présente invention concerne une rampe distributrice ou collectrice d'un fluide vers ou en provenance d'un réseau de circulation de fluide, par exemple un circuit de régulation thermique d'un pack-batterie ou d'une batterie de véhicule automobile électrique et/ou hybride.

La régulation thermique de la batterie, notamment dans le domaine des véhicules électriques et hybrides, est un aspect crucial de son fonctionnement. En effet, la température de la batterie doit rester comprise entre 20° C et 40° C afin d'assurer la fiabilité, l'autonomie et la performance du véhicule et d'optimiser la durée de vie de la batterie.

### Technique antérieure

Dans les véhicules électriques et hybrides, la batterie comprend généralement plusieurs cellules de stockage d'énergie électrique reliées entre elles de façon à créer un générateur électrique de tension et de capacité désirée. Ces cellules de stockage d'énergie électrique positionnées dans un boîtier de protection forment ce que l'on appelle un pack-batterie.

Généralement, la régulation thermique est assurée au moyen d'un fluide caloporteur qui circule dans un échangeur thermique positionné au contact de la batterie et parcouru par le fluide caloporteur selon un chemin de circulation du fluide plus ou moins complexe.

Le fluide caloporteur peut ainsi absorber la chaleur émise par chaque batterie afin de les refroidir ou selon les besoins, il peut lui apporter de la chaleur si la température de la batterie est insuffisante, pour son bon fonctionnement.

La régulation thermique d'un tel pack-batterie est généralement réalisée par une multiplicité de canaux tubulaires de circulation de fluide disposés en série ou en parallèle passant au plus près des cellules de la batterie. Ce réseau fluidique réalise ainsi un quadrillage serré sur toute la surface de la batterie pour former une zone d'échange thermique efficace.

Ces canaux sont généralement reliés entre eux à une entrée et une sortie commune par une rampe longitudinale collectrice ou distributrice de fluide.

Dans le cas des canaux disposés avec un pas serré, une telle rampe est généralement monobloc, présente une faible flexibilité dimensionnelle et peut difficilement par conséquent compenser des variations d'entraxes entre les canaux ou un éventuel désalignement des canaux. Afin de les rendre plus flexibles, ces rampes peuvent se terminer par un tuyau en élastomère ou thermoplastique.

Une telle conception exige de produire une nouvelle pièce de rampe à chaque nouvelle configuration d'échangeur thermique (nombre de canaux, entraxes des canaux, etc.). Ainsi, la conception est volumineuse et coûteuse.

Une autre solution connue de l'art antérieur consiste à relier les canaux par des petits tuyaux de raccordement flexible montés sur un raccord d'embranchement en forme de T à l'extrémité de chaque canal du réseau fluidique. Cette solution offre donc une grande flexibilité de variation d'entraxe entre les canaux et peut s'appliquer à n'importe quelle configuration d'échangeur thermique. Cette solution présente toutefois une limite lorsque le pas entre les canaux est trop faible. Dans ce cas, il est difficile de courber suffisamment le petit tuyau pour le mettre en prise entre les deux canaux du réseau.

### Résumé de l'invention

La présente invention vise à améliorer les solutions proposées dans l'état de la technique et à résoudre au moins partiellement les inconvénients exposés ci-dessus. L'invention a pour but de trouver une solution de raccordement flexible de plusieurs canaux du type « rampe » pouvant compenser des tolérances importantes entre canaux. Cette simplification permet également de réduire considérablement le coût de fabrication de la rampe tout en proposant un produit s'adaptant à plusieurs entraxes de canaux.

L'invention consiste à compenser les éventuels désalignements des canaux permettant le montage des pièces et évitant les contraintes transversales sur les connexions canaux / rampe.

A cet effet, l'invention a pour objet une rampe collectrice-distributrice d'un fluide comprenant une colonne pourvue selon un axe longitudinal d'une pluralité d'orifices d'écoulement du fluide espacés les uns des autres, caractérisé en ce que la colonne est montée de façon amovible à partir d'une pluralité de tronçons modulaires, chaque tronçon de colonne étant pourvu d'au moins un embout axial tubulaire femelle et/ou d'au moins un embout axial tubulaire mâle et muni d'une unique ouverture radiale délimitant l'orifice d'écoulement et en ce qu'un embout tubulaire mâle est apte à s'emboîter et à coulisser de façon étanche à l'intérieur d'un embout tubulaire femelle consécutif pour permettre un déplacement en translation des tronçons entre eux dans des directions d'allongement et de raccourcissement de la colonne afin de faire varier l'écartement entre deux orifices d'écoulement.

Cette solution est très compacte et permet de relier des canaux d'un réseau de circulation de fluide avec de faibles entraxes inter-canaux et s'adapte aux dispersions dimensionnelles des entraxes inter-canaux.

Par ailleurs, pour augmenter la longueur de la rampe, il suffit d'augmenter le nombre de tronçons modulaires ce qui permet d'augmenter le nombre de voies sur la rampe.

Une rampe collectrice-distributrice selon l'invention peut comporter l'une ou plusieurs des caractéristiques suivantes.

Dans un mode de réalisation préféré de l'invention, l'embout mâle a un diamètre extérieur réduit par rapport au diamètre extérieur de l'embout femelle.

Dans un mode de réalisation préféré de l'invention, le tronçon de colonne comprend un corps de connecteur tubulaire d'extension radiale qui délimite un passage d'écoulement du fluide muni d'une extrémité libre formant l'orifice d'écoulement.

Dans un mode de réalisation préféré de l'invention, le corps de connecteur forme une partie d'un connecteur à accouplement rapide.

Dans un mode de réalisation préféré de l'invention, la colonne comprend au moins un tronçon de colonne dit central configuré pour être raccordé à deux autres tronçons, ledit tronçon central comprenant au moins deux embouts tubulaires mâle(s) et/ou femelle(s) s'étendant axialement de chaque côté du tronçon.

Dans un mode de réalisation préféré de l'invention, les embouts mâle et femelle du tronçon central délimitent ensemble un épaulement de changement de diamètre.

Dans un mode de réalisation préféré de l'invention, la colonne comprend au moins un tronçon de colonne terminal configuré pour être monté en bout de colonne, ledit tronçon de colonne comprenant au moins un embout tubulaire mâle ou femelle s'étendant axialement d'un seul côté du tronçon et une partie terminale s'étendant axialement de l'autre côté.

Dans un mode de réalisation préféré de l'invention, la partie terminale comprend un organe d'accrochage et d'étanchéité pourvu de crans et présentant en coupe la forme d'un sapin pour un accrochage étanche à un organe externe.

Dans un mode de réalisation préféré de l'invention, la partie terminale comprend une paroi d'obturation frontale d'un canal axial d'écoulement du fluide de la colonne.

Dans un mode de réalisation préféré de l'invention, les embouts femelle et mâle comprennent des moyens de verrouillage mutuel afin de maintenir entre eux les tronçons avant assemblage sur l'échangeur thermique.

Dans un mode de réalisation préféré de l'invention, les moyens de verrouillage mutuel comprennent un ergot et un réceptacle de guidage axial de l'ergot pour former une liaison axiale coulissante à longueur de course prédéfinie.

Dans un mode de réalisation préféré de l'invention, l'ergot présente un plan axial incliné pour faciliter un encliquetage d'assemblage de deux tronçons entre eux.

Dans un mode de réalisation préféré de l'invention, les embouts comprennent des moyens de blocage en rotation, par exemple de type à fente axiale et nervure longitudinale.

Dans un mode de réalisation préféré de l'invention, chaque tronçon comprend au moins d'un côté une paire femelle et/ou mâle d'embouts tubulaires axiaux superposés l'un sur l'autre transversalement afin de former une rampe à double colonne.

Dans un mode de réalisation préféré de l'invention, l'embout mâle comporte au moins une rainure périphérique de réception d'au moins un élément d'étanchéité dans une région d'accouplement périphérique avec l'embout femelle consécutif.

Dans un mode de réalisation préféré de l'invention, l'embout mâle et l'embout femelle ont une section transversale de forme générale oblongue, la rainure périphérique étant elle aussi de forme générale oblongue pour recevoir au moins un élément d'étanchéité propre à se déformer de façon oblongue.

Dans un autre mode de réalisation préféré de l'invention, la forme générale oblongue est sensiblement elliptique.

De façon avantageuse, l'embout mâle délimite un canal interne d'écoulement du fluide subdivisé en au moins deux sous-canaux par une paroi de rigidification.

L'invention a encore pour objet un pack-batterie comprenant un échangeur de chaleur pourvu d'un réseau de circulation de fluide se terminant au moins par une rangée longitudinale d'orifices collecteur-distributeur et au moins une rampe selon l'invention pour être assemblée de telle sorte que les orifices de la rampe coïncident avec les orifices de l'échangeur.

### Brève description des dessins

D'autres caractéristiques et avantages de l'invention apparaîtront à la lumière de la description qui suit, faite en référence aux dessins annexes dans lesquels :
**Fig.1**

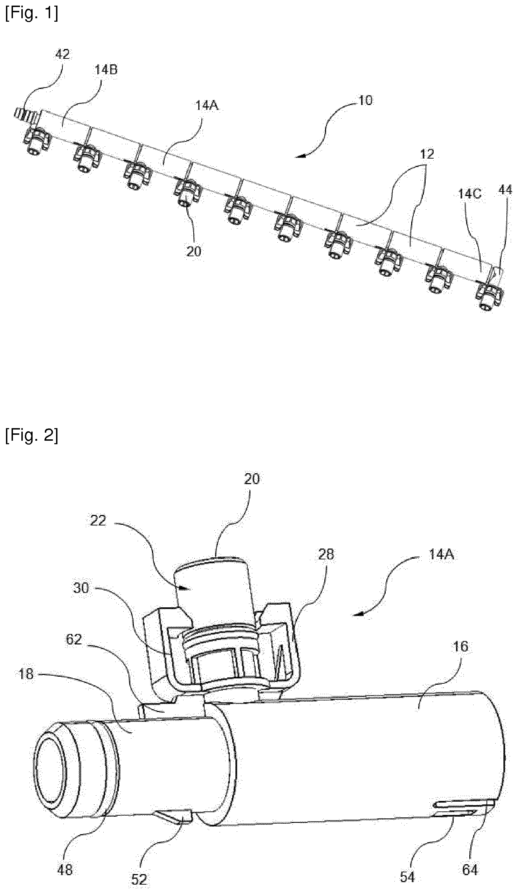

   [fig.1] est une vue en perspective d'une rampe selon l'invention.
**Fig.2**
   [fig.2] est une vue en perspective d'un tronçon de colonne central de la rampe de la figure 1.
**Fig.3**

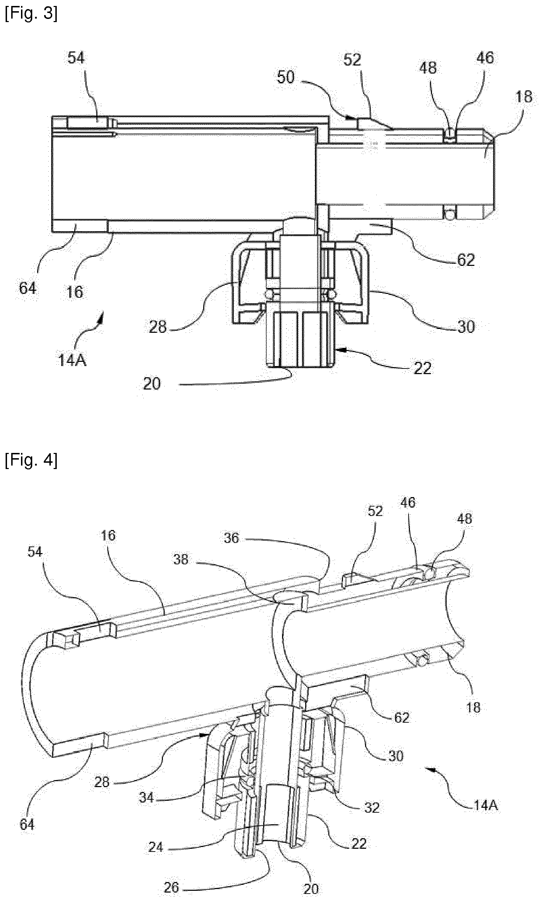

   [fig.3] est une vue en coupe du tronçon de colonne de la figure 2.
**Fig.4**
   [fig.4] est une vue en perspective d'une demi-coupe du tronçon de colonne de la figure 2.
**Fig.5**

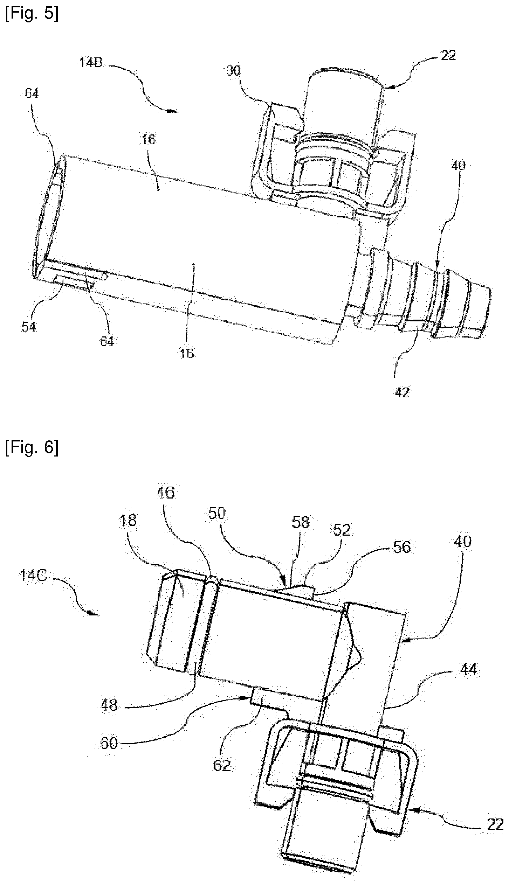

   [fig.5] est une vue en perspective d'un tronçon de colonne terminal de la rampe de la figure 1.
**Fig.6**
   [fig.6] est une vue en perspective d'un autre tronçon de colonne terminal de la figure 1.
**Fig.7**

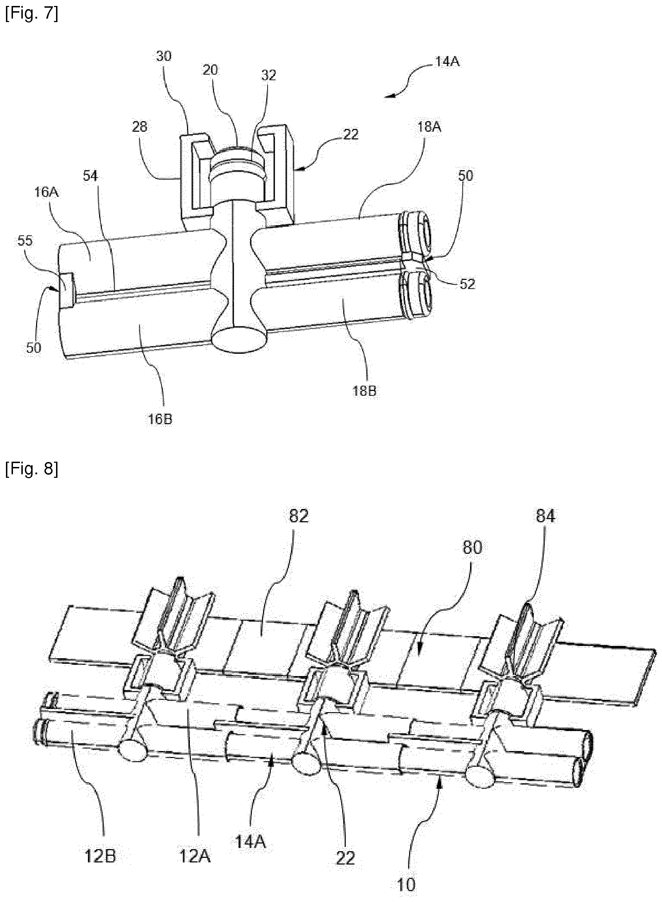

   [fig.7] est une vue en perspective d'un tronçon de double colonne d'une rampe selon un deuxième mode de réalisation de l'invention.
**Fig.8**
   [fig.8] est une vue en perspective d'un échangeur thermique d'un pack batterie dans lequel est montée la rampe de la figure 7.
**Fig.9**

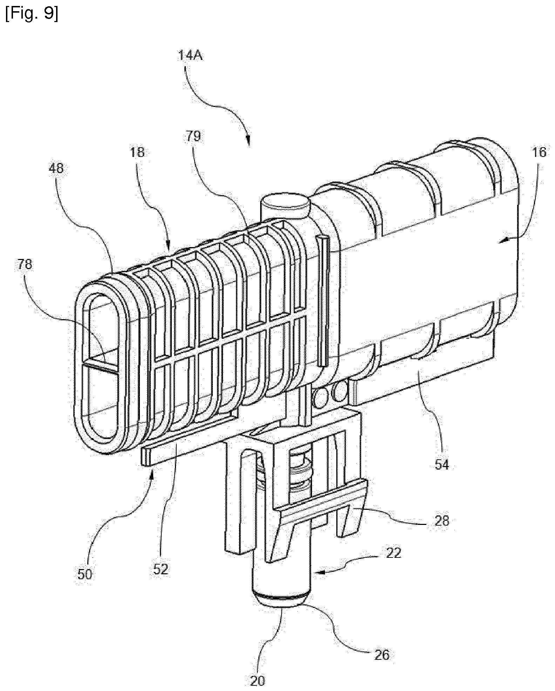

   [fig.9] est une vue en perspective d'un tronçon de colonne central d'une rampe selon un troisième mode de réalisation de l'invention.
**Fig.10**

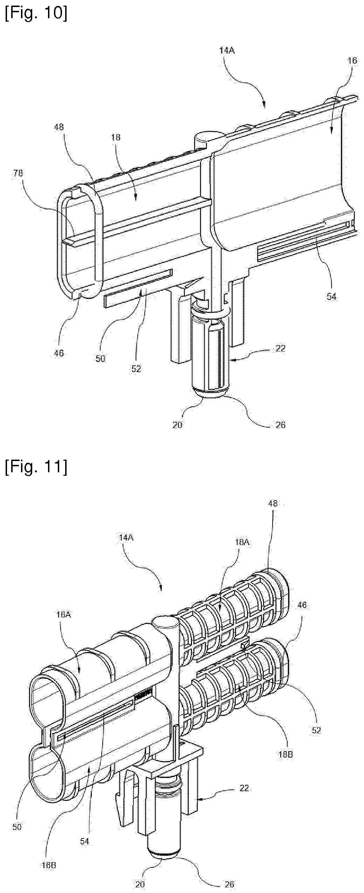

   [fig.10] est une vue en perspective écorchée du tronçon de colonne central de la rampe de la figure 9.
**Fig.11**
   [fig.11] est une vue en perspective d'un tronçon de double colonne central d'une rampe selon un quatrième mode de réalisation de l'invention.
**Fig.12**

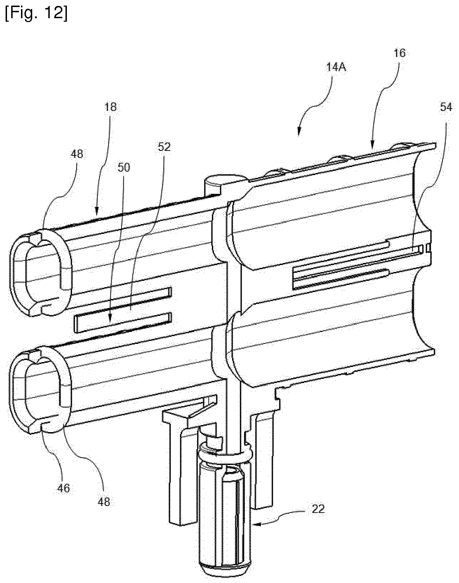

   [fig.12] est une vue en perspective écorchée du tronçon de colonne central de la rampe selon un quatrième mode de réalisation de l'invention.

### Description des modes de réalisation

On a représenté de façon schématique sur la figure 1 une rampe selon un premier mode de réalisation de l'invention. Cette rampe est désignée par la référence générale 10.

Cette rampe 10 est par exemple destinée à être montée sur un réseau de conduites de circulation d'un fluide d'un pack-batterie. Ce réseau (non représenté) présente par exemple une rangée d'extrémités de tubulures s'étendant longitudinalement à laquelle la rampe 10 peut venir se monter.

La rampe 10 comprend une colonne 12 pourvue selon un axe longitudinal d'une pluralité d'orifices 20 de distribution du fluide espacés avec un pas variable ou invariable les uns des autres. La colonne 12 comprend dans cet exemple un corps principal de forme générale cylindrique.

Conformément à l'invention, cette colonne 12 est montée de façon amovible à partir d'une pluralité de tronçons modulaires 14. Comme cela va être détaillé ci-dessous, la colonne 12 comprend plusieurs configurations de tronçons modulaires 14.

Dans ce premier mode de réalisation illustré par la figure 1, la colonne 12 comprend une pluralité de tronçons modulaires centraux 14A et des tronçons modulaires terminaux qui sont montés en bout de colonne et sont référencés distinctement 14B et 14C. Ainsi, le tronçon terminal référencé 14B a dans cet exemple une fonction d'entrée de rampe 10 et le tronçon terminal référencé 14C a une fonction de sortie de rampe 10 et ont des configurations distinctes pour remplir leurs fonctions respectives.

Il est à noter que, selon l'invention, les expressions « axial » et l'expression « axialement », telles qu'utilisées dans la présente description correspondent à la direction longitudinale de la colonne 12. Les termes « transversal », « transversalement », « frontal », « frontalement » concernent un plan généralement perpendiculaire à l'extension longitudinale de colonne. Enfin, le terme « radial » ou « radialement », désigne une direction perpendiculaire à l'axe principal longitudinal de la colonne 12.

Conformément à l'invention, chaque tronçon de colonne 14 est pourvu d'une unique ouverture radiale délimitant l'orifice de distribution 20. A cet effet, de préférence, chaque tronçon modulaire 14 comprend un corps de connecteur tubulaire 22 d'extension radiale qui délimite un passage 24 d'écoulement du fluide muni d'une extrémité libre 26. Cette extrémité libre 26 délimite l'orifice d'écoulement du fluide référencé 20 du tronçon 14.

Dans l'exemple décrit, le corps de connecteur 22 est conformé en une partie de connecteur rapide 28 du tronçon à une partie complémentaire externe (non représentée), par exemple appartenant à l'échangeur thermique. De façon classique, un connecteur rapide 28 comporte une partie mâle et une partie femelle qui s'accouplent par simple introduction de l'une dans l'autre.

Dans l'exemple décrit, le corps de connecteur 22 comprend des moyens de verrouillage 30 de la partie mâle dans la partie femelle du connecteur rapide 28.

Par exemple, le corps de connecteur 22 est pourvu de languettes 30 d'encliquetage élastique formant au moins partiellement les moyens de verrouillage 30. Par ailleurs, le corps de connecteur 22 est pourvu d'au moins une gorge 32 de réception d'un joint torique d'étanchéité 34 afin de réaliser l'étanchéité lors de l'emmanchement rapide du corps de connecteur 22 avec la partie externe.

Conformément à l'invention, chaque tronçon de colonne 14 est pourvu d'au moins un embout axial tubulaire femelle 16 ou d'au moins un embout axial tubulaire mâle 18 par exemple pour les tronçons terminaux 14B ou 14C ou encore d'au moins deux embouts femelle 16 et mâle 18 s'étendant chacun axialement de chaque côté d'un tronçon central 14A. Dans une variante non illustrée de l'invention, un tronçon central 14A peut comporter deux embouts identiques mâles 18 ou femelles 16 s'étendant chacun axialement de chaque côté.

On a représenté en détail un tronçon de colonne 14A central sur les figures 2 à 4. Ce tronçon central 14A est configuré pour être raccordé à deux autres tronçons 14A, 14B et/ou 14C. Le tronçon central 14A comprend au moins deux embouts tubulaires s'étendant axialement chacun de chaque côté du tronçon central 14A.

Dans l'exemple illustré sur ces figures, le tronçon central 14A comprend d'un premier côté un embout tubulaire mâle 18 et d'un autre côté un embout tubulaire femelle 16. Dans cet exemple, les embouts tubulaires 16 et 18 sont alignés axialement. En variante, les embouts tubulaires 16 et 18 peuvent s'étendre axialement en « V » et plus spécifiquement selon une configuration en « Y » en considérant les axes d'embouts 16 et 18 et l'orifice d'écoulement 20.

Les embouts mâle 18 et femelle 16 délimitent de préférence ensemble un épaulement de changement de diamètre 36. Ce changement de diamètre est visible extérieurement. A l'intérieur du tronçon 14, on observe également un rétrécissement 38 de la section de passage du fluide dans le sens allant de l'embout femelle 16 à l'embout mâle 18.

On a également représenté sur la figure 5, un tronçon de colonne terminal 14B configuré pour être monté en bout de colonne, ledit tronçon de colonne comprenant au moins un embout tubulaire mâle 18 ou femelle 16 s'étendant axialement d'un seul côté du tronçon 14B et une partie terminale 40 s'étendant axialement de l'autre côté. Dans le cas du tronçon 14B de la figure 5, la partie terminale 40 comprend un organe 42 d'accrochage et d'étanchéité pourvu de crans et présentant en coupe la forme d'un sapin pour un accrochage étanche à un organe externe, par exemple un tuyau flexible. Toute autre forme connue de l'homme du métier et permettant de réaliser une étanchéité avec un conduit ou un raccord de connexion est aussi envisageable pour l'organe d'accrochage 42. Par ailleurs, l'embout du tronçon terminal 14B est dans cet exemple un embout femelle 16. Cet organe d'accrochage 42 s'étend à partir d'une face frontale d'extrémité de l'embout femelle 16.

On a représenté sur la figure 6 une autre configuration de tronçon terminal 14C. Dans cette figure, le tronçon 14C comprend d'un côté un embout mâle 16 et de l'autre côté une paroi frontale 44 d'obturation d'un canal d'écoulement du fluide selon une direction axiale. Cette paroi frontale 44 peut avoir une forme curviligne dans le prolongement de la forme du corps de connecteur 22.

Bien entendu, toutes sortes de combinaisons de ces configurations sont envisageables sans sortir pour autant du cadre de la présente invention. Ainsi, le tronçon modulaire terminal de sortie 14C peut comporter un embout femelle 16 et le tronçon modulaire terminal d'entrée 14B peut comporter un embout mâle 18.

Plus particulièrement, conformément à l'invention, l'embout tubulaire mâle 18 d'un premier tronçon 14 est apte à s'emboîter et à coulisser de façon étanche à l'intérieur de l'embout tubulaire femelle 16 d'un deuxième tronçon pour permettre un déplacement en translation des tronçons 14 entre eux dans des directions d'allongement et de raccourcissement de la colonne 12 afin de faire varier l'écartement entre deux orifices de distribution 20 de la colonne 12.

De préférence, l'embout mâle 18 comporte dans une région d'accouplement périphérique avec un embout femelle 16 une rainure périphérique 46 de réception d'un joint d'étanchéité 48. Le cas échéant, l'étanchéité pourra être renforcée en ajoutant une ou plusieurs rainures périphériques et, respectivement, un ou plusieurs joints d'étanchéité.

De préférence, l'embout mâle 18 a un diamètre externe réduit par rapport au diamètre externe de l'embout femelle 16. Par exemple, le diamètre externe de l'embout mâle 18 est sensiblement égal au diamètre interne de l'embout femelle 16.

Dans l'exemple décrit, les embouts femelle 16 et mâle 18 comprennent des moyens 50 de verrouillage mutuel. Ceci permet d'éviter une désolidarisation intempestive des tronçons 14 de la colonne 12 une fois ces derniers montés ensemble.

De préférence, les moyens de verrouillage mutuel 50 comprennent des moyens de guidage en coulissement selon une course en translation prédéfinie. Par ailleurs, de préférence les embouts mâle 18 et femelle 16 comprennent également des moyens de blocage 60 en rotation relative des deux embouts 16 et 18.

Les moyens de guidage 50 en coulissement comportent dans cet exemple un ergot de guidage axial 52 et un réceptacle 54 de guidage, par exemple une fente ou éventuellement une rainure, dans laquelle l'ergot 52 est reçu et guidé en coulissement axial.

Dans l'exemple illustré notamment sur les figures 2 à 6, l'embout tubulaire mâle 18 est ainsi pourvu sur sa surface circonférentielle extérieure d'une partie en saillie radiale formant l'ergot 52. L'embout tubulaire femelle 16 est en outre percé d'une ouverture 54 de forme générale oblongue ou rectangulaire sur sa paroi périphérique externe s'étendant dans le sens de la longueur selon une direction longitudinale formant le réceptacle de guidage 54. Dans l'exemple décrit, cette ouverture 54 est localisée à proximité de l'extrémité libre de l'embout femelle 16.

La course de coulissement relative de l'embout mâle 18 à l'intérieur de l'embout femelle 16 est définie par les dimensions relatives axiales de l'ergot 52 et de son réceptacle 54. Ainsi, l'ergot 52 vient en butée de fin de course contre une des extrémités axiales de la fente de guidage 54 définissant une fin de course mécanique de coulissement des deux embouts 16 et 18 l'un dans l'autre.

Par exemple l'ergot 52 comprend, comme cela est visible par exemple en détail sur la figure 6, une paroi 56 radiale formant butée d'arrêt et un plan axial incliné 58. Ce plan axial incliné 58 permet de faciliter l'insertion élastique de l'ergot 52 à l'intérieur de son réceptacle 54. L'ergot 52 a comme cela est illustré en détail sur la figure 6 une section axiale de forme générale trapézoïdale. Bien entendu, d'autres conformations d'ergot peuvent convenir dans le cadre de la présente invention.

Afin de bloquer la rotation relative des deux embouts 16 et 18 résultant d'un jeu pouvant exister dans la liaison glissière formée par les moyens de guidage en coulissement 50, il est prévu également des moyens de blocage en rotation relative 60. Ces moyens de blocage 60 sont ici de préférence réalisés par une liaison de type fente longitudinale et saillie radiale. Mais bien entendu, d'autres configurations pourront être proposées sans sortir du cadre de l'invention.

Ainsi, comme cela est illustré sur les figures 2 à 4, l'embout mâle 18 comprend encore sur sa surface circonférentielle extérieure une partie en saillie radiale 62 en forme de nervure orientée dans le sens longitudinal et destiné à coopérer avec une extrémité fendue 64 de l'embout femelle 16. La nervure 62 s'étend à partir de l'épaulement de changement de diamètre et est diamétralement opposée à l'ergot de coulissement 52.

Ainsi, sur la figure 2, on voit en outre que l'embout femelle 16 présente deux fentes 64 d'extrémité destinées dans cet exemple à permettre une dilatation élastique de sa paroi périphérique et faciliter son engagement autour de l'embout mâle 16. Ces fentes 64 de dilatation sont disposées de façon diamétralement opposées, l'une des fentes de dilation 64 étant adjacentes au réceptacle de guidage 54, l'autre des fentes de dilatation 64 étant mise à profit pour le blocage en rotation avec la nervure 62.

Comme cela est visible sur les figures 2 à 4, dans le cas du tronçon central 14A, le corps de connecteur 22 et les deux embouts tubulaires 16 et 18 reproduisent une forme générale de « T ». Il pourrait être envisagé de les conformer en forme de « Y ». Par ailleurs, le tronçon 14C a une forme générale de coude.

On a représenté sur la figure 7 un tronçon central 14A de colonne 12 d'une rampe selon un deuxième mode de réalisation de l'invention. Dans ce deuxième mode de réalisation, les éléments analogues à ceux du premier mode de réalisation portent les mêmes références.

Dans ce second mode, comme cela est illustré en figure 7, chaque tronçon 14A comprend au moins d'un côté une paire d'embouts tubulaires axiaux identiques mâles 18A, 18B ou femelles 16A, 16B superposés l'un sur l'autre transversalement afin de former une rampe 10 à double colonne 12A, 12B.

La paire d'embouts mâles 18A, 18B et la paire d'embouts femelles 16A, 16B comprennent des moyens de verrouillage mutuel 50. Par exemple, la paire d'embouts mâles 18A, 18B comprend une zone 70 de liaison longitudinale des deux embouts de la paire se terminant avec une partie en saillie transversale formant un ergot de guidage 52.

En outre, par exemple, la paire d'embouts femelles 16A, 16B comprend un élément de liaison 55 reliant les deux embouts 16A, 16B de la paire femelle en extrémité et comprend un espace longitudinal intermédiaire existant 54 entre les deux embouts 16A, 16B de la paire à l'intérieur duquel l'ergot 52 de la paire d'embouts mâles 18A, 18B peut être guidé axialement.

Dans ce second mode de réalisation, la présence d'une paire d'embouts permet de bloquer la rotation relative des tronçons consécutifs entre eux. Il n'est donc pas nécessaire de prévoir des moyens de blocage en rotation supplémentaire.

La figure 8 illustre un exemple d'implantation d'une rampe 10 à double colonne 12A, 12B dans un support d'échangeur thermique 82 pour un pack-batterie 80. Cet échangeur de chaleur 80 est pourvu d'un réseau 84 de circulation de fluide se terminant par au moins une rangée longitudinale d'orifices.

La rampe 10 à double colonne 12A, 12B est configurée pour être assemblée de telle sorte que les orifices de la rampe 10 coïncident avec les orifices de l'échangeur 82.

Bien que non illustrée dans cette présente description, l'homme du métier déduira aisément d'autres configurations de tronçons de colonne pour ce deuxième mode de réalisation, notamment des tronçons de colonne configurés pour être montés en bout de colonne.

On a représenté sur les figures 9 et 10 un tronçon central 14A de colonne 12 d'une rampe selon un troisième mode de réalisation de l'invention. Dans ce troisième mode de réalisation, les éléments analogues à ceux du premier mode de réalisation ou du deuxième mode de réalisation portent les mêmes références.

De préférence, dans ce troisième mode de réalisation, l'embout mâle 18 a une section transversale de forme générale oblongue. Il en va de même de l'embout femelle 16 destiné à coopérer avec l'embout mâle. Par le terme « oblongue », au sens de la présente invention, on entend une forme arrondie plus longue que large. Dans cet exemple, la rainure périphérique 46 présente elle aussi une forme générale oblongue pour recevoir un joint d'étanchéité 48 propre à se déformer selon une forme générale oblongue à l'état monté dans la rainure 46. De préférence, dans une variante non illustrée, la forme générale oblongue est sensiblement elliptique.

De manière générale, ce troisième mode de réalisation présente l'avantage, grâce à l'arrangement particulier de la section de forme générale oblongue, de limiter au maximum les pertes de charge dans le circuit de refroidissement. Ceci permet notamment, de façon non limitative, d'augmenter le débit, de limiter le dimensionnement d'une pompe, d'améliorer le transfert thermique ou de répondre à toute autre exigence ou optimisation fonctionnelle.

Un tel arrangement s'avère particulièrement pertinent lorsque l'environnement extérieur de la pièce impose une répartition des contraintes dimensionnelles dans une ou plusieurs directions tout en laissant de l'espace vacant dans d'autres directions. Il est alors souhaitable, dans un souci d'optimisation de l'occupation de l'espace, d'étirer le canal dans les directions le permettant et d'optimiser ainsi les dimensions de la section de passage du fluide.

A titre d'exemple, le passage d'une section circulaire de diamètre « D » à une section oblongue composée de deux demi-cercles de diamètre « D » reliés aux extrémités entre eux par des segments de jonction de longueur « L » augmente la surface de la section d'écoulement d'un produit « L » par « D », et multiplie donc la surface de la section d'un facteur non négligeable.

Le joint torique 48 est par exemple de forme générale circulaire, ce dernier pouvant accepter, via un dimensionnement approprié, d'être monté dans la rainure 46 correspondante de forme générale oblongue, sous réserve de ne pas dépasser une certaine limite de déformation.

Dans le cas de canaux avec une section oblongue très allongée nécessitant des déformations très importantes du joint torique 48, ou pour répondre à des contraintes techniques spécifiques, il est possible d'opter pour un joint de forme, par exemple, non circulaire et/ou non torique (joints à lèvre, ....)

Le canal de section circulaire, oblongue ou autre, peut également intégrer une paroi de rigidification ou nervure longitudinale interne 78 qui renforce mécaniquement le canal comme cela est illustré sur les figures 9 et 10. En outre, le tronçon 14 peut également de préférence comporter des nervures 79 de rigidication circonférentielles ou semi-circonférentielles.

Cette nervure interne 78 peut également, dans une variante non illustrée, séparer des fluides. Il est ainsi possible en disposant et en concevant les entrées-sorties spécifiquement de faire circuler deux fluides différents dans la même rampe, dans le même sens ou dans des sens opposés, ou un circuit d'alimentation et un circuit de retour du même fluide. Ceci s'applique préférentiellement à une rampe à double colonne, telle que celle décrite ci-après en rapport avec le quatrième mode de réalisation, dans laquelle les colonnes peuvent être séparées fluidiquement ou non.

De même, dans le cas de contraintes d'architectures spécifiques, il sera également possible de disposer d'un dispositif asymétrique, tant du point de vue de la géométrie du ou des canaux d'écoulement principaux de la rampe que des orifices d'entrées/sorties.

Même si des formes simples circulaires ou oblongues sont privilégiées, il est toujours possible d'opter pour des formes autres et plus complexes, notamment dans le cadre de contraintes d'architectures spécifiques.

Dans ce cas, les étanchéités de liaison entre les différents éléments de la rampe sont prévues en conséquence. Les moyens de verrouillage mutuels 50 peuvent être disposés au centre entre les deux colonnes d'écoulement de la rampe, ou bien déportés sur l'un des côtés de la rampe. De même, le système peut embarquer deux moyens de verrouillage mutuels.

De préférence, les tronçons modulaires terminaux qui sont montés en bout de colonne et sont référencés distinctement 14B et 14C peuvent également être de géométrie non cylindrique et peuvent également présenter une section transversale oblongue, pour en augmenter la section de passage. Cette augmentation de passage peut être réalisée aussi bien pour les rampes à simple colonne que pour les rampes à double colonne.

On a représenté sur les figures 11 et 12 un tronçon central 14A de colonne 12 d'une rampe selon un quatrième mode de réalisation de l'invention. Dans ce quatrième mode de réalisation, les éléments analogues à ceux du deuxième mode de réalisation portent les mêmes références.

Dans ce quatrième mode, comme cela est illustré en figure 11, chaque tronçon 14A comprend au moins d'un côté une paire d'embouts tubulaires axiaux identiques mâles 18A, 18B ou femelles 16A, 16B superposés l'un sur l'autre transversalement afin de former une rampe 10 à double colonne 12A, 12B.

De préférence, comme cela est illustré, chaque embout tubulaire mâle ou femelle présente une section transversale de forme générale oblongue.

On va maintenant décrire les principaux aspects d'une rampe collectrice-distributrice d'un fluide selon le deuxième mode de réalisation illustré par les figures 7 et 8. Bien entendu, cette description s'applique également aux autres modes de réalisation précédemment décrits.

Initialement, la rampe 10 se présente en pièces détachées avec plusieurs tronçons centraux 14A et des tronçons terminaux 14B et 14C. Le pack-batterie 80 présente une rangée longitudinale d'orifices collecteur-distributeur. Au cours d'une première étape, les tronçons centraux 14A et les tronçons terminaux 14B et 14C sont assemblés ensemble grâce aux moyens de verrouillage mutuels. Les connecteurs 22 sont espacés de façon imprécise. Dans une troisième étape, la rampe 10 est amenée en regard des orifices collecteur-distributeur du pack 80 et chaque tronçon 14A est coulissé de façon télescopique pour faire coïncider les connecteurs 22 avec les orifices du pack 80 et réaliser leur assemblage par encliquetage ou tout autre moyen de fixation.

Bien entendu, l'invention ne se limite pas aux modes de réalisation précédemment décrits. D'autres modes de réalisation à la portée de l'homme du métier peuvent aussi être envisagés sans sortir du cadre de l'invention définie par les revendications ci-après.

## Revendications

1. Rampe (10) collectrice-distributrice d'un fluide comprenant une colonne (12) pourvue selon un axe longitudinal d'une pluralité d'orifices (20) d'écoulement du fluide espacés les uns des autres, **caractérisée en ce que** la colonne (12) est montée de façon amovible à partir d'une pluralité de tronçons modulaires (14A, 14B, 14C), chaque tronçon de colonne (14A, 14B, 14C) étant pourvu d'au moins un embout axial tubulaire femelle et/ou d'au moins un embout axial tubulaire mâle (16, 18) et muni d'une unique ouverture radiale délimitant l'orifice d'écoulement (20) **et en ce qu'**un embout tubulaire mâle (18) est apte à s'emboîter et à coulisser de façon étanche à l'intérieur d'un embout tubulaire femelle (16) consécutif pour permettre un déplacement en translation des tronçons (14A, 14B, 14C) entre eux dans des directions d'allongement et de raccourcissement de la colonne (12) afin de faire varier l'écartement entre deux orifices d'écoulement (20).

2. Rampe (10) selon la revendication précédente, dans laquelle l'embout mâle (18) a un diamètre extérieur réduit par rapport au diamètre extérieur de l'embout femelle (16).

3. Rampe (10) selon l'une quelconque des revendications précédentes, dans laquelle le tronçon de colonne (14, 14A, 14B, 14C) comprend un corps de connecteur tubulaire (22) d'extension radiale qui délimite un passage (24) d'écoulement du fluide muni d'une extrémité libre (26) formant l'orifice d'écoulement (20).

4. Rampe (10) selon la revendication précédente, dans laquelle le corps de connecteur (22) forme une partie d'un connecteur à accouplement rapide.

5. Rampe (10) selon l'une quelconque des revendications précédentes, dans laquelle la colonne (12) comprend au moins un tronçon de colonne dit central (14A) configuré pour être raccordé à deux autres tronçons (14A, 14B, 14C), ledit tronçon central (14A) comprenant au moins deux embouts tubulaires mâle(s) (18) et/ou femelle(s) (16) s'étendant axialement de chaque côté du tronçon (14A, 14B, 14C).

6. Rampe (10) selon la revendication précédente, dans laquelle les embouts mâle (18) et femelle (16) du tronçon central (14A) délimitent ensemble un épaulement (36) de changement de diamètre.

7. Rampe (10) selon l'une quelconque des revendications précédentes, dans laquelle la colonne (12) comprend au moins un tronçon de colonne terminal (14B, 14C) configuré pour être monté en bout de colonne, ledit tronçon de colonne (14B, 14C) comprenant au moins un embout tubulaire mâle (18) ou femelle (16) s'étendant axialement d'un seul côté du tronçon (14B, 14C) et une partie terminale (40) s'étendant axialement de l'autre côté.

8. Rampe (10) selon la revendication précédente, dans laquelle la partie terminale (40) comprend un organe (42) d'accrochage et d'étanchéité pourvu de crans et présentant en coupe la forme d'un sapin pour un accrochage étanche à un organe externe.

9. Rampe (10) selon la revendication 5, dans laquelle la partie terminale (40) comprend une paroi (44) d'obturation frontale d'un canal axial d'écoulement du fluide de la colonne (12).

10. Rampe (10) selon l'une quelconque des revendications précédentes, dans laquelle les embouts femelle (16) et mâle (18) comprennent des moyens de verrouillage mutuel (50).

11. Rampe selon la revendication précédente, dans laquelle les moyens de verrouillage mutuel (50) comprennent un ergot (52) et un réceptacle (54) de guidage axial de l'ergot (52) pour former une liaison axiale coulissante à longueur de course prédéfinie.

12. Rampe (10) selon la revendication 9 ou 10, dans laquelle l'ergot (52) présente un plan axial incliné pour faciliter un encliquetage d'assemblage de deux tronçons (14) entre eux.

13. Rampe (10) selon l'une quelconque des revendications précédentes, dans laquelle les embouts (16, 18) comprennent des moyens (60) de blocage en rotation, par exemple de type à fente axiale (64) et nervure longitudinale (62).

14. Rampe (10) selon l'une quelconque des revendications précédentes, dans laquelle chaque tronçon (14, 14A, 14B, 14C) comprend au moins d'un côté une paire femelle (16A, 16B) et/ou mâle (18A, 18B) d'embouts tubulaires axiaux superposés l'un sur l'autre transversalement afin de former une rampe (10) à double colonne (12A, 12B).

15. Rampe (10) selon l'une quelconque des revendications précédentes, dans laquelle l'embout mâle (18) comporte au moins une rainure (46) périphérique de réception d'au moins un élément d'étanchéité (48) dans une région d'accouplement périphérique avec l'embout femelle consécutif.

16. Rampe (10) selon la revendication précédente, dans laquelle l'embout mâle (18) et l'embout femelle (16) ont une section transversale de forme générale oblongue, la rainure périphérique (46) étant elle aussi de forme générale oblongue pour recevoir au moins un élément d'étanchéité (48) propre à se déformer de façon oblongue.

17. Rampe (10) selon la revendication précédente, dans laquelle la forme générale oblongue est sensiblement elliptique.

18. Rampe (10) selon l'une quelconque des revendications précédentes, dans laquelle l'embout mâle (18) délimite un canal interne d'écoulement du fluide subdivisé en au moins deux sous-canaux par une paroi de rigidification (78).

19. Pack-batterie (80) comprenant un échangeur de chaleur (82) pourvu d'un réseau (84) de circulation de fluide se terminant au moins par une rangée longitudinale d'orifices collecteur-distributeur et au moins une rampe (10) selon l'une quelconque des revendications précédentes configurée pour être assemblée de telle sorte que les orifices de la rampe coïncident avec les orifices de l'échangeur (84).
